# EUROPÄISCHE PATENTSCHRIFT

(11) **EP 2 802 786 B1**
(45) Veröffentlichungstag und Bekanntmachung des Hinweises auf die Patenterteilung: **05.02.2020**
(21) Anmeldenummer: 12795448.5
(22) Anmeldetag: 05.12.2012
(51) Int. Cl.: F16B 13/06, F16B 13/00, F16B 25/00

(54) **SPREIZANKER**
EXPANSION ANCHOR
ANCRAGE EXTENSIBLE

(30) Priorität: 13.01.2012 DE 102012200462
(43) Veröffentlichungstag der Anmeldung: 19.11.2014
(73) Patentinhaber: HILTI Aktiengesellschaft, 9494 Schaan (LI)
(72) Erfinder: HAKENHOLT, Christoph, 6800 Feldkirch (AT); APPL, Joerg, 6800 Feldkirch (AT)
(74) Vertreter: Hilti Aktiengesellschaft Corporate Intellectual Property
(86) Internationale Anmeldenummer: PCT/EP2012/074475
(87) Internationale Veröffentlichungsnummer: WO 2013/104465

(56) Entgegenhaltungen:
- EP-A1- 1 072 802
- DE-A1- 10 118 374
- US-A1- 2008 008 553

## Beschreibung

Die Erfindung betrifft einen Spreizanker, insbesondere für mineralische Baustoffe, beispielsweise Beton, gemäss dem Oberbegriff des Anspruchs 1, sowie ein Setzverfahren. Ein gattungsgemässer Spreizanker ist ausgestattet mit einer Spreizhülse zur Verankerung an einer Bohrlochwand und mit einem Ankerbolzen, der durch die Spreizhülse hindurch verläuft, wobei der Ankerbolzen einen Spreizbereich zum Aufspreizen der Spreizhülse aufweist.

Ein gattungsgemässer drehmomentkontrolliert spreizender Anker ist beispielsweise aus der DE 41 16 149 A1 bekannt. Zum Setzen eines solchen Spreizankers wird gemäss dem Stand der Technik ein Bohrloch erstellt und anschliessend wird der Anker mit einem Hammer eingeschlagen. Schliesslich wird die am Spreizanker angeordnete Mutter beispielsweise mit einem Schraubenschlüssel angezogen, wobei der Spreizbereich in die Spreizhülse eingezogen und die Spreizhülse dabei aufgespreizt wird. Aus dem Erreichen eines Zieldrehmomentes an der Mutter kann in der Regel darauf geschlossen werden, dass eine Zielaufspreizung an der Spreizhülse und damit eine gewünschte Auszugsfestigkeit erreicht ist.

Der Setzvorgang kann jedoch relativ aufwändig sein, da in der Regel drei unterschiedliche Werkzeuge benötigt werden, nämlich Bohrmaschine, Hammer und Schraubenschlüssel.

Ein weiterer Spreizanker ist aus der DE10118374 A1 bekannt. Dieser weist am Konus eine Rillenstruktur auf, die in einem Winkel zur Achsrichtung des Spreizankers verläuft.

Die US 2008/0008553 A1 beschreibt eine selbstbohrende Ankerschraube, die einen Schaft und eine Spreizhülse aufweist, wobei am Ende des Schafts eine Bohrspitze angeordnet ist. Die US 2008/0008553 A1 beschreibt ferner ein Setzwerkzeug für diese Ankerschraube.

Aufgabe der Erfindung ist es, einen Spreizanker und ein Setzverfahren anzugeben, die bei geringem Aufwand und hoher Zuverlässigkeit einen besonders einfachen Setzprozess erlauben.

Die Aufgabe wird erfindungsgemäss durch einen Spreizanker mit den Merkmalen des Anspruchs 1 und ein Verfahren mit den Merkmalen des Anspruchs 8 gelöst. Bevorzugte Ausführungsformen sind in den jeweils abhängigen Ansprüchen angegeben.

Ein erfindungsgemässer Spreizanker ist dadurch gekennzeichnet, dass der Ankerbolzen ein Schneidgewinde zum Einschneiden in die Bohrlochwand aufweist.

Ein erster Grundgedanke der Erfindung kann darin gesehen werden, am Ankerbolzen des Spreizankers ein Schneidgewinde vorzusehen, welches sich in die zylindrische Bohrlochwand im Untergrund einschneiden kann. Damit ist das Schneidgewinde in der Lage, den Ankerbolzen bei Drehung des Ankerbolzens in das Bohrloch einzuziehen. Der Anker kann sich also bei einer Drehbewegung des Ankerbolzens relativ zum Untergrund selbsttätig in den Untergrund schrauben. Erfindungsgemäss kann somit das Eintreiben des Ankers in das Bohrloch, für das nach dem Stand der Technik regelmässig axial gerichtete Kräfte, insbesondere Hammerstösse, erforderlich waren, nun durch eine Drehbewegung bewirkt werden. Hierdurch wiederum kann der Setzvorgang erheblich vereinfacht werden. Denn sowohl das dem Eintreiben des Ankerbolzens vorausgehende Erstellen des Bohrlochs als auch das dem Eintreiben des Ankerbolzens nachfolgende Anziehen der Spreizankermutter beinhalten ebenfalls Drehbewegungen. Die zum Erzeugen dieser Drehbewegungen verwendeten Werkzeuge können nun potenziell auch zum Eintreiben des Ankers in das Bohrloch verwendet werden. Darüber hinaus kann die Erfindung das Setzen des Spreizankers in schwierig zu erreichenden Bereichen vereinfachen, in denen Hammerschläge nicht ohne weiteres erzeugt werden können.

Vorzugsweise übernimmt das Schneidgewinde keine wesentliche Traglast, das heisst die Traglast wird weiterhin primär von der Spreizhülse aufgebracht, welche im Anschluss an das Eindrehen des Ankerbolzens in das Bohrloch durch axiales Einziehen des Spreizbereichs mit der zylindrischen Bohrlochwand verspreizt wird. Da in diesem Fall relativ geringe Anforderungen an das Schneidgewinde gestellt werden, können niedrige Herstellungskosten bei gleichwohl hohen Auszugsfestigkeiten realisiert werden.

Damit sich das Schneidgewinde in das umgebende Material einschneiden kann, weist das Schneidgewinde zweckmässigerweise zumindest bereichsweise eine Oberflächenhärte auf, die grösser ist als die Oberflächenhärte der Bohrlochwand. Hierzu kann das Schneidgewinde auch Schneidkörper aufweisen, welche die Härte punktuell erhöhen.

Die Spreizhülse und/oder der Ankerbolzen bestehen vorzugsweise aus einem Metallmaterial. Damit der Spreizbereich des Ankerbolzens die Spreizhülse aufspreizen kann, verjüngt sich der Ankerbolzen im Spreizbereich zum bohrlochabgewandten, insbesondere bohrlochaussenseitigen Ende des Ankerbolzens hin, d.h. der Querschnitt des Ankerbolzens nimmt mit zunehmendem Abstand vom bohrlochabgewandten Ende zu. Der Spreizbereich kann insbesondere zumindest einen konischen Abschnitt aufweisen. Der Spreizbereich ist zum Aufspreizen der Spreizhülse beim axialen Einziehen des Spreizbereichs in die Spreizhülse vorgesehen, wobei das axialen Einziehen auch eine Drehkomponente des Ankerbolzens relativ zur Spreizhülse beinhalten kann, z.B. wenn das Schneidgewinde zum Aufspreizen der Spreizhülse wieder aus dem Untergrund ausgedreht wird.

Insbesondere für ein leichteres Aufspreizen der Spreizhülse und/oder zur einfacheren Fertigung kann die Spreizhülse einen oder mehrere Schlitze aufweisen, die sich insbesondere in Axialrichtung erstrecken können. Unter der Axialrichtung kann erfindungsgemäss insbesondere eine Richtung verstanden werden, in der sich die Längsachse des Ankerbolzens und/oder der Spreizhülse erstreckt. Die Spreizhülse kann auf ihrer Aussenseite Vorsprünge für einen noch besseren Verbund mit der Bohrlochwand aufweisen.

Nach der Erfindung weist der Ankerbolzen geeigneter Weise ein Schraubengewinde auf. Dieses Schraubengewinde, welches zweckmässigerweise zumindest bereichsweise ausserhalb des Bohrlochs verlaufen kann, kann zum Einleiten der Betriebslasten in den Ankerbolzen und damit in den Untergrund dienen. Insbesondere kann sich das erfindungsgemässe Schneidgewinde vom erfindungsgemässen Schraubengewinde unterscheiden.

Weiterhin ist es bevorzugt, dass auf dem Schraubengewinde eine Mutter angeordnet ist. Diese Mutter, welche ein zum Schraubengewinde korrespondierendes Innengewinde aufweist, kann als Bestandteil des erfindungsgemässen Spreizankers angesehen werden. Sie kann zum Befestigen von Nutzlasten am Ankerbolzen dienen.

Besonders bevorzugt ist es, dass das Schneidgewinde axial versetzt zum Schraubengewinde am Ankerbolzen angeordnet ist. Da das Schneidgewinde und das Schraubengewinde unterschiedliche Funktionen haben, können sie auch andere Anforderungen an ihre Fertigung stellen. Aufgrund der bevorzugten räumlichen Trennung der beiden Gewinde ist eine besonders einfache Fertigung möglich. Insbesondere kann vorgesehen sein, dass der Ankerbolzen am Schneidgewinde eine höhere Oberflächenhärte aufweist als am Schraubengewinde.

Darüber hinaus ist es zweckmässig, dass das Schneidgewinde zumindest bereichsweise auf einer dem Schraubengewinde abgewandten Seite der Spreizhülse am Ankerbolzen angeordnet ist und/oder dass das Schneidgewinde zumindest bereichsweise auf einer dem Schraubengewinde abgewandten Seite des Spreizbereichs am Ankerbolzen angeordnet ist. Gemäss dieser Ausführungsvariante eilt das Schneidgewinde der Spreizhülse bzw. dem Spreizbereich voraus, wenn der Anker in das Bohrloch eingetrieben wird. Dies kann gewährleisten, dass das Schneidgewinde bereits sicher in der Bohrlochwand fasst, wenn die relativ stark an der Bohrlochwand reibende Spreizhülse in das Bohrloch eintritt. Somit kann das Eintreiben des Ankers in das Bohrloch noch weiter vereinfacht werde.

Besonders bevorzugt ist es, dass das Schneidgewinde denselben Drehsinn aufweist wie das Schraubengewinde. In diesem Fall kann vorgesehen werden, den Ankerbolzen mit mitdrehender Mutter in einer ersten Drehrichtung in das Bohrloch einzutreiben, und sodann zum Verspreizen der Spreizhülse die Mutter drehfest zu fixieren und den Ankerbolzen in umgekehrter Drehrichtung zu bewegen. Die Drehung des Ankerbolzens relativ zur Mutter in umgekehrter Drehrichtung bewirkt, dass sich der Ankerbolzen relativ zur Mutter axial nach hinten und damit bei axial festliegender Mutter aus dem Bohrloch herausbewegt. Aufgrund des Drehrichtungswechsels zwischen dem Eintreibvorgang und dem Verspreizvorgang wird eine übermässige Belastung im Bereich des Schneidgewindes vermieden. Weiterhin ist es vorteilhaft, dass das Schneidgewinde und das Schraubengewinde dieselbe Ganghöhe aufweisen, was die Belastung beim Verspreizen weiter reduzieren kann.

Das Schneidgewinde sollte dem Verspreizvorgang, der eine axiale Bewegung des Spreizbereichs und somit des Ankerbolzens relativ zum Bohrloch beinhaltet, möglichst nicht im Wege stehen. Daher kann beispielsweise vorgesehen sein, dass das Schneidgewinde so konfiguriert wird, dass es während des Verspreizvorgangs vom Ankerbolzen abschert.

Insbesondere kann das Schneidgewinde an der Spitze des Ankerbolzens angeordnet sein. Dies kann beispielsweise im Hinblick auf den Materialaufand vorteilhaft sein. Die Anordnung des Schneidgewindes an der Spitze kann insbesondere beinhalten, dass sein axialer Abstand vom nähergelegenen Ende des Ankerbolzen maximal das einfache, insbesondere maximal die Hälfte oder maximal ein Viertel der Ganghöhe des Schneidgewindes beträgt.

Eine weitere vorteilhafte Ausgestaltung liegt darin, dass der Ankerbolzen einen Drehangriff aufweist, an dem zum Übertragen eines Drehmoments auf den Ankerbolzen eine Antriebswelle formschlüssig ankuppelbar ist. Ein solcher Drehangriff erlaubt es in besonders einfacher und zuverlässiger Weise das Drehmoment, welches zum Eintreiben des Ankerbolzens, das heisst das zum Einschneiden des Schneidgewindes in die Bohrlochwand, erforderlich ist, auf den Ankerbolzen aufzubringen.

Der Drehangriff ist vorzugsweise endseitig, insbesondere stirnseitig, am Ankerbolzen angeordnet, insbesondere an dem dem Schneidgewinde und/oder der Spreizhülse gegenüberliegenden, vorzugsweise bohrlochabgewandten Ende. Hierdurch ist der Drehangriff besonders gut zugänglich, was den Setzvorgang weiter vereinfacht.

Weiterhin ist es vorteilhaft, dass der Drehangriff einen Mehrkant, insbesondere einen Aussenmehrkant, beispielsweise einen Aussensechskant aufweist. An einem stirnseitig am Ankerbolzen angeordneten Mehrkant kann ein Werkzeug besonders einfach angesetzt werden.

Beispielsweise kann vorgesehen sein, den Spreizanker mittels eines Tangentialschlagschraubers in das Bohrloch einzutreiben, der vorzugsweise mittelbar oder unmittelbar am Drehangriff angesetzt wird. Ein solcher Tangentialschlagschrauber ermöglicht ein besonders effizientes Eindrehen des Ankers in Beton.

Es kann ein Setzwerkzeug für einen erfindungsgemässen Spreizanker vorgesehen werden, mit einer Antriebsnuss, die drehfest am Ankerbolzen ankuppelbar ist, und mit einer Anzugsnuss, die drehfest an der Mutter ankuppelbar ist. Mittels der Antriebsnuss kann der Ankerbolzen zum Eintreiben des Ankers in das Bohrloch in Drehung versetzt werden. Mittels der Anzugsnuss kann die Mutter relativ zum rotierenden Ankerbolzen festgelegt werden oder/und die Mutter zum Verspreizen der Spreizhülse drehend betätigt werden.

Besonders bevorzugt ist es, dass die Antriebsnuss koaxial zur Anzugsnuss und/oder zumindest teilweise im Inneren der Anzugsnuss angeordnet ist. Hierdurch kann eine besonders kompakte Anordnung erhalten werden.

Weiterhin ist es vorteilhaft, dass das Setzwerkzeug eine schaltbare Kupplung zur schaltbaren Drehmomentübertragung zwischen der Antriebsnuss und der Anzugsnuss aufweist. Gemäss dieser Ausführungsform sind die beiden Nüsse drehfest gekuppelt, wobei diese Kupplung jedoch bedarfsweise gelöst werden kann. Damit ist für den Antrieb der beiden Nüsse lediglich ein einziger Antriebsmotor erforderlich und das Eintreiben des Ankers und das anschliessende Anziehen der Mutter kann ohne Werkzeugwechsel durchgeführt werden. Insbesondere kann vorgesehen sein, die beiden Nüsse während des Eintreibens des Ankers in das Bohrloch drehfest zu kuppeln, damit während dieses Vorgangs die Mutter relativ zum Ankerbolzen stationär bleibt, und die drehfeste Kupplung zum Anziehen der Mutter und/oder Aufspreizen der Spreizhülse aufzuheben, damit die Mutter relativ zum Ankerbolzen versetzt werden kann. Die schaltbare Kupplung kann beispielsweise einen Anschlag aufweisen.

Ferner ist es bevorzugt, dass die Antriebsnuss relativ zur Anzugsnuss axial verschiebbar ist. Diese Ausführungsform berücksichtigt, dass sich beim Verspreizen der Spreizhülse und/oder beim Anziehen der Mutter die Mutter axial relativ zum Ankerbolzen bewegt. Die axiale Verschiebbarkeit der beiden Nüsse relativ zueinander kann diese Bewegung aufnehmen und somit für eine besonders zuverlässige Drehmomentübertragung sorgen.

Vorzugsweise weist das Setzwerkzeug einen Tangentialschlagschrauber auf, der drehfest mit der Antriebsnuss und/oder der Anzugsnuss gekuppelt ist. Ein Tangentialschlagschrauber ermöglicht ein besonders effizientes Eintreiben des Ankers. Insbesondere kann die Antriebsnuss oder auch die Anzugsnuss einen Mehrkant, insbesondere einen Vierkant, aufweisen, an dem der Tangentialschlagschrauber lösbar befestigt ist. Der Tangentialschlagschrauber kann auch fest mit der Antriebsnuss bzw. der Anzugsnuss verbunden sein.

Die Erfindung betrifft auch ein Verfahren, bei dem ein erfindungsgemässer Spreizanker bereitgestellt wird und insbesondere mit einem hier beschriebenen Setzwerkzeug gesetzt wird, bei dem der Ankerbolzen des Spreizankers drehend in ein Bohrloch eingetrieben wird, wobei sich das Schneidgewinde in die Bohrlochwand einschneidet, und der Ankerbolzen anschliessend wieder ein Stück weit aus dem Bohrloch herausbewegt wird, wobei der Spreizbereich in die Spreizhülse eingezogen wird und er die Spreizhülse aufspreizt. Beim Herausbewegen des Ankerbolzens verbleibt die Spreizhülse aufgrund eines Reib- und/oder Formschlusses mit der Bohrlochwand im Bohrloch, so dass es zu einer axialen Relativbewegung zwischen Ankerbolzen und Spreizhülse kommt, bei der der Spreizbereich in die Spreizhülse gelangt und die Spreizhülse aufspreizt.

Besonders bevorzugt ist es, dass der Ankerbolzen in einer ersten Drehrichtung, beispielsweise im Uhrzeigersinn, drehend in das Bohrloch eingetrieben wird, und dass anschliessend die Drehrichtung des Ankerbolzens umgekehrt wird, beispielsweise in den Gegenuhrzeigersinn, so dass der Ankerbolzen wieder ein Stück weit aus dem Bohrloch herausbewegt wird. Vor der Drehrichtungsumkehr kann die Mutter drehfest festgelegt werde, so dass die Drehung des Ankerbolzens relativ zur Mutter zu einer Axialbewegung des Ankerbolzens relativ zu Mutter führt.

Ferner betrifft die Erfindung eine Befestigungsanordnung mit einem Baukörper, in dem ein Bohrloch angeordnet ist, wobei im Bohrloch ein erfindungsgemässer Spreizanker angeordnet ist. Der Baukörper kann insbesondere ein mineralisches Material, beispielsweise Beton, aufweisen.

Die Erfindung wird nachfolgend anhand bevorzugter Ausführungsbeispiele näher erläutert, die schematisch in der beiliegenden Figur dargestellt sind. Es zeigt schematisch:

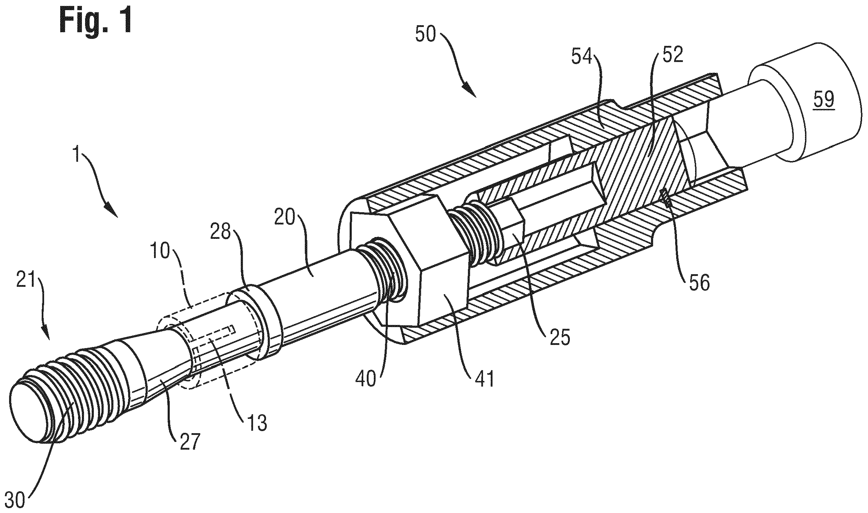

- Figur 1:: eine teilweise geschnittene perspektivische Darstellung eines erfindungsgemässen Spreizankers mit einem Setzgerät.

Ein Beispiel eines erfindungsgemässen Spreizankers 1 ist in Figur 1 dargestellt. Der Spreizanker 1 weist einen Ankerbolzen 20 und eine gestrichelt dargestellte Spreizhülse 10 auf, welche den Ankerbolzen 20 umgibt. Die Spreizhülse 10 kann mit axial verlaufenden Schlitzen 13 versehen sein, um ein leichteres Aufspreizen zu ermöglichen.

Am hinteren Ende des Ankerbolzens 20 ist am Ankerbolzen 20 ein als Aussengewinde ausgebildetes Schraubengewinde 40 vorgesehen. An diesem Schraubengewinde 40 ist eine Mutter 41 mit einem korrespondierenden Innengewinde angeordnet.

Zum Aufspreizen der Spreizhülse 10 weist der Ankerbolzen 20 auf der dem Schraubengewinde 40 abgewandten Seite der Spreizhülse 10 einen Spreizbereich 27 auf. In diesem Spreizbereich 27 verjüngt sich der Querschnitt des Ankerbolzens 20 zur Spreizhülse 10, d.h. zum Schraubengewinde 40 hin. Im dargestellten Ausführungsbeispiel ist die Spreizhülse zylindermantelförmig und der Spreizbereich 27 konisch ausgebildet.

Auf der dem Schraubengewinde 40 zugewandten Seite der Spreizhülse 10 weist der Ankerbolzen 20 einen beispielsweise ringförmigen Anschlag 28 auf, der eine axiale Verschiebung der Spreizhülse 10 zum Schraubengewinde 40 hin begrenzt, insbesondere beim Eintreiben des Spreizankers 1 in ein Bohrloch.

Zusätzlich zum Schraubengewinde 40 ist am Ankerbolzen 20 ein Schneidgewinde 30 vorgesehen, welches sich zum Eintreiben des Spreizankers 1 in ein Bohrloch in die Bohrlochwand einschneiden kann. Hierzu ist der Durchmesser des Ankerbolzens 20 am Schneidgewinde 30 am grössten. Das Schneidgewinde 30 kann gehärtet sein und/oder zusätzliche Schneidkörper aus Hartmetall aufweisen. Das Schneidgewinde 30 ist vom Schraubengewinde 40 axial, d.h. in Längsrichtung des Ankerbolzens 20, beabstandet. Das Schneidgewinde befindet sich auf der dem Schraubengewinde 40 abgewandten Seite der Spreizhülse 10 und auf der dem Schraubengewinde 40 abgewandten Seite des Anschlags 28 an der Spitze 21 des Ankers 1.

An seiner der Spitze 21 abgewandten Stirnseite weist der Ankerbolzen 20 einen Drehangriff 25 auf, der im dargestellten Ausführungsbeispiel als Aussensechskant ausgebildet ist. An diesen Drehangriff 25 ist eine Antriebswelle, beispielsweise die Antriebsnuss 52 eines Setzwerkzeuges, drehfest ankuppelbar.

Figur 1 zeigt ferner ein Beispiel eines Setzwerkzeugs 50 für einen erfindungsgemässen Spreizanker 1. Das Setzwerkzeug 50 weist einen nur grob schematisch dargestellten Tangentialschlagschrauber 59 sowie eine Antriebsnuss 52 auf, wobei der Tangentialschlagschrauber 59 drehfest mit der Antriebsnuss 52 gekuppelt ist. Die Antriebsnuss 52 wiederum ist über den Drehangriff 25 lösbar formschlüssig drehfest mit dem Ankerbolzen 20 gekuppelt. Für die formschlüssig drehfeste Verbindung zwischen Antriebsnuss 52 und Ankerbolzen 20 weist die Antriebsnuss 52 einen Innenmehrkant auf, der mit der Form des Drehangriffs 25 korrespondiert.

Das Setzwerkzeug 50 weist ferner eine Anzugsnuss 54 auf. Die Anzugsnuss 54 ist lösbar formschlüssig drehfest mit der Mutter 41 gekuppelt. Für die formschlüssig drehfeste Verbindung zwischen Anzugsnuss 54 und Mutter 41 weist die Anzugsnuss 54 einen Innenmehrkant auf, der mit der Form der Mutter 41 korrespondiert.

Die Antriebsnuss 52 ist koaxial im Inneren der Anzugsnuss 54 angeordnet, und relativ zur Anzugsnuss 54 axial verschiebbar. Bedarfsweise kann die innenliegende Antriebsnuss 52 drehfest mit der Anzugsnuss 54 gekuppelt werden, so dass eine Drehung des Tangentialschlagschraubers 59 über die Antriebsnuss 52 auf die aussenliegende Anzugsnuss 54 übertragen werden kann. Hierzu weist das Setzwerkzeug 50 eine lediglich grob schematisch dargestellte schaltbare Kupplung 56 zwischen Antriebsnuss 52 und Anzugsnuss 54 auf.

Zum Setzen eines Spreizankers 1 in einem Baukörper wird zunächst, vorzugsweise mit einer Hammerbohrmaschine, ein Bohrloch in den Baukörper gebohrt. Der Spreizanker 1 wird sodann durch Betätigen des Tangentialschlagschraubers 59 drehend in das Bohrloch eingetrieben. Hierzu wird der Ankerbolzen 20 mit dem hinteren Drehangriff 25 in die Antriebsnuss 52 eingeführt, die wiederum vom Tangentialschlagschrauber 59 in Drehung versetzt wird. Dabei wird mittels der Kupplung 56 die Anzugsnuss 54 drehfest mit der Antriebsnuss 52 und damit dem Tangentialschlagschrauber 59 gekoppelt, so dass die Anzugsnuss 54 die Sechskantmutter 41 mit gleicher Drehzahl und gleichem Drehsinn dreht, mit denen der Ankerbolzen 20 von der Antriebsnuss 52 gedreht wird. Bedingt durch die identischen Drehbewegungen beider Nüsse 52, 54 bleibt deren Relativposition und somit die Position der Mutter 41 relativ zum Ankerbolzen 20 während des Eintreibprozesses konstant.

Ist die erforderliche Setztiefe des Spreizankers 1 erreicht, wird, z.B. durch einen Anschlag, die Anzugsnuss 54 fixiert. Die Antriebsnuss 52 und somit der Ankerbolzen 20 werden aber weiterhin bewegt, nun aber mit umgekehrtem Drehsinn (vorzugsweise gegen den Uhrzeigersinn). Dadurch bewegt sich die Mutter 41 auf dem Schraubengewinde 40 und kann ein den Ankerbolzen 20 umgebendes Bauteil am Baukörper festlegen und gleichzeitig den Ankerbolzen 20 im Baukörper verspreizen.

Der Vorteil für den Anwender besteht darin, dass er mit einem Werkzeug den Anker setzen und verspreizen kann. Soweit die beiden Nüsse 52 und 54 als abnehmbarer Aufsatz auf dem Tangentialschlagschrauber 59 ausgeführt sind, kann der Anwender diesen auch für andere Tätigkeiten verwenden, z.B. für das Setzen einer Betonschraube.

Es sind unabhängig von dem hier beschriebenen Verfahren weitere mechanische Systeme zum Setzen eines erfindungsgemässen Spreizankers 1 denkbar.

## Patentansprüche

1. Spreizanker (1)
- mit einer Spreizhülse (10) zur Verankerung an einer Bohrlochwand und
- mit einem Ankerbolzen (20), der durch die Spreizhülse (10) hindurch verläuft,
- wobei der Ankerbolzen (20) einen Spreizbereich (27) zum Aufspreizen der Spreizhülse (10) aufweist,
**dadurch gekennzeichnet,**
**dass** der Ankerbolzen (20) ein Schneidgewinde (30) zum Einschneiden in die Bohrlochwand aufweist.

2. Spreizanker (1) nach Anspruch 1,
**dadurch gekennzeichnet,**
**dass** der Ankerbolzen (20) ein Schraubengewinde (40) aufweist, und
**dass** auf dem Schraubengewinde (40) eine Mutter (41) angeordnet ist.

3. Spreizanker (1) nach Anspruch 2,
**dadurch gekennzeichnet,**
**dass** das Schneidgewinde (30) axial versetzt zum Schraubengewinde (40) am Ankerbolzen (20) angeordnet ist und/oder
**dass** das Schneidgewinde (30) zumindest bereichsweise auf einer dem Schraubengewinde (40) abgewandten Seite der Spreizhülse (10) am Ankerbolzen (20) angeordnet ist.

4. Spreizanker (1) nach einem der Ansprüche 2 oder 3,
**dadurch gekennzeichnet,**
**dass** das Schneidgewinde (30) denselben Drehsinn aufweist wie das Schraubengewinde (40).

5. Spreizanker (1) nach einem der vorstehenden Ansprüche,
**dadurch gekennzeichnet,**
**dass** das Schneidgewinde (30) an der Spitze (21) des Ankerbolzens (20) angeordnet ist.

6. Spreizanker (1) nach einem der vorstehenden Ansprüche,
**dadurch gekennzeichnet,**
**dass** der Ankerbolzen (20) einen Drehangriff (25) aufweist, an dem zum Übertragen eines Drehmoments auf den Ankerbolzen (20) eine Antriebswelle formschlüssig ankuppelbar ist

7. Spreizanker (1) nach Anspruch 6,
**dadurch gekennzeichnet,**
**dass** der Drehangriff (25) stirnseitig am Ankerbolzen (20) angeordnet ist, und
**dass** der Drehangriff (25) einen Aussenmehrkant aufweist.

8. Verfahren, bei dem ein Spreizanker (1) nach einem der Ansprüche 1 bis 7 bereitgestellt und bei dem
- der Ankerbolzen (20) des Spreizankers (1) drehend in ein Bohrloch eingetrieben wird, wobei sich das Schneidgewinde (30) in die Bohrlochwand einschneidet, und
- der Ankerbolzen (20) anschliessend wieder ein Stück weit aus dem Bohrloch herausbewegt wird, wobei der Spreizbereich (27) in die Spreizhülse (10) eingezogen wird und die Spreizhülse (10) aufspreizt.

9. Verfahren nach Anspruch 8, bei dem
- der Ankerbolzen (20) in einer ersten Drehrichtung drehend in das Bohrloch eingetrieben wird, und
- anschliessend die Drehrichtung des Ankerbolzens (20) umgekehrt wird, so dass der Ankerbolzen (20) wieder ein Stück weit aus dem Bohrloch herausbewegt wird.

10. Befestigungsanordnung mit einem Baukörper, in dem ein Bohrloch angeordnet ist, wobei im Bohrloch ein Spreizanker (1) nach einem der Ansprüche 1 bis 7 angeordnet ist.

## Claims

1. Expansion anchor (1)
- with an expansion sleeve (10) for anchoring to a wall of a drill hole and
- with an anchor bolt (20), which runs through the expansion sleeve (10),
- in which the anchor bolt (20) has an expansion area (27) for the expansion sleeve (10) to spread open,
**characterised in that**
the anchor bolt (20) has a cutting thread (30) for cutting into the wall of the drill hole.

2. Expansion anchor (1) according to claim
1,**characterised in that**
the anchor bolt (20) has a screw thread (40), and
a nut (41) is arranged on the screw thread (40).

3. Expansion anchor (1) according to claim 2,
**characterised in that**
the cutting thread (30) is arranged on the anchor bolt (20) axially offset to the screw thread (40) and/or
the cutting thread (30) is arranged on the anchor bolt (20) on a side of the expansion sleeve (10) facing away from the screw thread (40).

4. Expansion anchor (1) according to one of claims 2 or 3,
**characterised in that**
the cutting thread (30) has the same direction of rotation as the screw thread (40).

5. Expansion anchor (1) according to one of the previous
claims, **characterised in that**
the cutting thread (30) is arranged at the tip (21) of the anchor bolt (20).

6. Expansion anchor (1) according to one of the previous
claims, **characterised in that**
the anchor bolt (20) has a twist grip (25), to which a drive shaft may be connected positively for transferring a torque to the anchor bolt (20)

7. Expansion anchor (1) according to claim
6,**characterised in that**
the twist grip (25) is arranged on the anchor bolt (20) on the front face, and
the twist grip (25) has a polygonal exterior.

8. Method, in which an expansion anchor (1) according to one of claims 1 to 7 is provided and in which
- the anchor bolt (20) of the expansion anchor (1) is driven turning into a drill hole, in which the cutting thread (30) cuts into the wall of the drill hole, and
- the anchor bolt (20) is then moved a bit further out of the drill hole again, in which the expansion area (27) is moved into the expansion sleeve (10) and the expansion sleeve (10) spreads open.

9. Method according to claim 8, in which
- the anchor bolt (20) is driven turning into the drill hole in a first direction of rotation, and
- then the direction of rotation of the anchor bolt (20) is reversed, so that the anchor bolt (20) is moved a bit further out of the drill hole again.

10. Fastening arrangement with a structure, in which a drill hole is arranged, in which an expansion anchor (1) according to one of claims 1 to 7 is arranged in the drill hole.

## Revendications

1. Ancrage expansible (1) comportant :
- une douille d'expansion (10) pour un ancrage sur une paroi de trou de perçage et
- un boulon d'ancrage (20) s'étendant à travers la douille d'expansion (10),
- dans lequel le boulon d'ancrage (20) comporte une zone d'expansion (27) pour écarter la douille d'expansion (10),
**caractérisé en ce que**
le boulon d'ancrage (20) comporte un filet taraudeur (30) pour tarauder la paroi de trou de perçage.

2. Ancrage expansible (1) selon la revendication 1,
**caractérisé en ce que**
le boulon d'ancrage (20) comporte un filet de vis (40), et un écrou (21) est agencé sur le filet de vis (40) .

3. Ancrage expansible (1) selon la revendication 2,
**caractérisé en ce que**
le filet taraudeur (30) est agencé sur le boulon d'ancrage (20) de manière axialement décalée par rapport au filet de vis (40), et/ou
le filet taraudeur (30) est agencé sur le boulon d'ancrage (20) sur un côté de la douille d'expansion (10) opposé au filet de vis (40) au moins dans certaines zones.

4. Ancrage expansible (1) selon l'une des revendications 2 ou 3,
**caractérisé en ce que**
le filet taraudeur (30) a le même sens de rotation que le filet de vis (40).

5. Ancrage expansible (1) selon l'une des revendications précédentes,
**caractérisé en ce que**
le filet de vis (30) est agencé sur la pointe (21) du boulon d'ancrage (20).

6. Ancrage expansible (1) selon l'une des revendications précédentes,
**caractérisé en ce que**
le boulon d'ancrage (20) comporte un élément de prise rotatif (25) auquel un arbre d'entraînement peut être accouplé par complémentarité de formes pour transmettre un couple au boulon d'ancrage (20).

7. Ancrage expansible (1) selon la revendication 6,
**caractérisé en ce que**
l'élément de prise rotatif (25) est agencé sur le boulon d'ancrage (20) du côté frontal, et
l'élément de prise rotatif (25) a un polygone extérieur.

8. Procédé dans lequel un ancrage expansible (1) selon l'une des revendications 1 à 7 est fourni et dans lequel
- le boulon d'ancrage (20) de l'ancrage expansible (1) est entraîné en rotation dans un trou de perçage, le filet taraudeur (30) taraudant la paroi de trou de perçage, et
- le boulon d'ancrage (20) est ensuite de nouveau légèrement extrait du trou de perçage, la zone d'expansion (27) étant rentrée dans la douille d'expansion (10) et écartant la douille d'expansion (10).

9. Procédé selon la revendication 8, dans lequel
- le boulon d'ancrage (20) est entraîné en rotation dans le trou de perçage dans un premier sens de rotation, et
- le sens de rotation du boulon d'ancrage (20) est ensuite inversé, de sorte que le boulon d'ancrage (20) est de nouveau légèrement extrait du trou de perçage.

10. Ensemble de fixation avec un corps structurel dans lequel un trou de perçage est agencé, un ancrage expansible (1) selon l'une des revendications 1 à 7 étant agencé dans le trou de perçage.
